# EUROPÄISCHE PATENTSCHRIFT

(11) **EP 3 114 358 B1**
(45) Veröffentlichungstag und Bekanntmachung des Hinweises auf die Patenterteilung: **12.09.2018**
(21) Anmeldenummer: 15707899.9
(22) Anmeldetag: 25.02.2015
(51) Int. Cl.: F16B 2/18, G05G 1/12

(54) **KLEMMHEBEL FÜR UMGEBUNGEN MIT ERHÖHTEN HYGIENISCHEN ANFORDERUNGEN**
CLAMPING LEVER FOR ENVIRONMENTS HAVING INCREASED HYGIENIC REQUIREMENTS
LEVIER DE SERRAGE POUR ENVIRONNEMENTS NÉCESSITANT UNE HYGIÈNE ACCRUE

(30) Priorität: 07.03.2014 DE 102014204195
(43) Veröffentlichungstag der Anmeldung: 11.01.2017
(73) Patentinhaber: NovoNox KG, 71706 Markgröningen (DE)
(72) Erfinder: LEUZE, Jürgen, 72172 Sulz a.N. (DE); MÜLLER, Boris, 72348 Rosenfeld (DE)
(74) Vertreter: Kohler Schmid Möbus Patentanwälte
(86) Internationale Anmeldenummer: PCT/EP2015/053916
(87) Internationale Veröffentlichungsnummer: WO 2015/132102

(56) Entgegenhaltungen:
- EP-A1- 2 051 153
- EP-A1- 2 679 838
- CN-U- 201 615 124
- US-A- 2 667 801

## Beschreibung

Die Erfindung betrifft einen Klemmhebel, umfassend
- ein einstückiges Griffteil mit einem hülsenförmigen Ansatz und einem Handgriff,
- und ein Befestigungsteil,
wobei das Befestigungsteil in einem Aufnahmeraum des hülsenförmigen Ansatzes axial beweglich geführt ist und zwischen einer freigegebenen Stellung, in der das Griffteil gegenüber dem Befestigungsteil frei drehbar ist, und einer Eingriffsstellung, in der das Befestigungsteil mit dem Griffteil zum Drehen des Befestigungsteils mittels des Griffteils gekoppelt ist, im Aufnahmeraum verschiebbar ist,
wobei das Befestigungsteil im Aufnahmeraum des hülsenförmigen Ansatz unverlierbar gehalten ist,
und wobei der hülsenförmige Ansatz von einer Einführöffnung des Aufnahmeraums weg geschlossen ausgebildet ist und das Befestigungsteil an einem oberen Ende kappenartig umgreift.

Ein solcher Klemmhebel ist aus der EP 2 051 153 A1 bekannt geworden.

Klemmhebel sind Befestigungsmittel. Sie werden typischerweise dazu eingesetzt, um bewegliche Bauteile an Strukturen auf einfache Weise schnell und leicht wieder lösbar zu verspannen.

Bei einem typischen Klemmhebel ist an einem Griffteil ein Handgriff ausgebildet, der von einem Bediener leicht mit einer Hand ergriffen und gedreht werden kann, um ein Drehmoment auf ein Befestigungsteil, das in einem hülsenförmigen Ansatz des Griffteils geführt ist, auszuüben. Je nach axialer Verschiebeposition des Griffteils gegenüber dem Befestigungsteil ist das Griffteil entweder gegenüber dem Befestigungsteil frei drehbar oder drehfest gekoppelt. Mit dem Befestigungsteil erfolgt dann ein Verspannen oder Lösen des Bauteils, wobei das Befestigungsteil über ein Gewinde oder eine andere Kopplungseinrichtung verfügt, um eine Kraftübertragung auf die Struktur zu ermöglichen.

In vielen Zweigen der Technik, etwa in der Lebensmittelindustrie oder der pharmazeutischen Industrie, werden erhöhte hygienische Anforderungen an die Arbeitsumgebung gestellt. Die eingesetzten Anlagen dürfen insbesondere keine Keime in die produzierten Güter, wie Lebensmittel oder Medikamente, einbringen, und dürfen entsprechend keine Brutstätten für Keime zur Verfügung stellen.

Aus der WO 2013/030226 A2 ist es bekannt, Teile eines Extruders, die mit pharmazeutischen oder biomedizinischen Materialien in Kontakt kommen, aus inerten und verschleißarmen Materialien wir Keramik oder Edelstahl zu fertigen. Edelstahloberflächen haben dabei bevorzugt eine Mittenrautiefe Ra von weniger als 1,0 µm, noch mehr bevorzugt von weniger als 0,2 µm.

Aus der Zeitschrift "Pharma + Food", Ausgabe 06/13 (Oktober 2013), Seite 29, sind durch den Artikel "Schrauben statt Schweißen" Schraubverbindungen bekannt geworden, die für hygienisch sensible Anwendungsbereiche, etwa in der Pharma- und Lebensmittelindustrie, eingesetzt werden können. Die Schraubverbindungen umfasse auf Hochglanz polierte Spezialschrauben und Hutmuttern sowie Usit-Ringe mit aufvulkanisiertem Dichtwulst.

Aus der EP 2 051 153 A1 ist ein Klemmhebel bekannt geworden, der im allgemeinen Anlagenbau gut eingesetzt werden kann, jedoch in Umgebungen mit erhöhten Hygieneanforderungen nicht einsetzbar ist. Der Klemmhebel kann insbesondere nicht ausreichend gut gereinigt werden.

### Aufgabe der Erfindung

Der Erfindung liegt die Aufgabe zugrunde, einen Klemmhebel vorzustellen, der in Umgebungen mit erhöhten Hygieneanforderungen eingesetzt werden kann.

### Kurze Beschreibung der Erfindung

Diese Aufgabe wird gelöst durch einen Klemmhebel der eingangs genannten Art, der dadurch gekennzeichnet ist,
dass das Griffteil und das Befestigungsteil aus einem metallischen Werkstoff gefertigt sind, insbesondere Edelstahl des Typs A1, A2, A3, A4 oder A5,
dass die äußere Oberfläche des Griffteils und zumindest ein Teil der äußeren Oberfläche des Befestigungsteils einen Mittenrauwert Ra von 0,8 µm oder weniger, insbesondere 0,1 µm oder weniger, aufweisen,
dass der Handgriff geschlossen ausgebildet ist,
dass der Aufnahmeraum des hülsenförmigen Ansatzes eine Nut aufweist, in welche ein Spannring, insbesondere ein Runddrahtring, eingelegt ist, wobei der Spannring gegenüber der Nut nach innen übersteht und das Befestigungsteil den Spannring mit einer Rastkante hintergreift,
und dass im hülsenartigen Ansatz an der Einführöffnung eine Dichtung aus einem elastischen Material, insbesondere EPDM, gehalten ist, wobei die Dichtung am Befestigungsteil anliegt und den Aufnahmeraum gegen die Umgebung abdichtet.

Der erfindungsgemäße Klemmhebel wurde so angepasst, das er den Anforderungen eines so genannten "Hygenic Design" erfüllen kann, also für die Anwendung in Umgebungen mit erhöhten hygienischen Anforderungen geeignet ist. Beim erfindungsgemäßen Klemmhebel kann insbesondere eine ausreichend gute Reinigbarkeit sichergestellt werden, so dass der Klemmhebel bei Bedarf im Einklang mit einschlägigen Vorschriften gereinigt und desinfiziert werden kann, insbesondere in einer Anlage vor Ort, das heißt ohne Demontage der Anlage, in der der Klemmhebel eingesetzt wird.

Gemäß der Erfindung sind das Griffteil und das Befestigungsteil aus einem metallischen Werkstoff, insbesondere Edelstahl gefertigt, und deren Oberflächen werden, zumindest soweit eine äußere Verschmutzung hygienisch relevant ist, durch geeignete Bearbeitungsverfahren geglättet. Man beachte, dass das Griffteil und das Befestigungsteil aus verschiedenen Werkstoffen und auch mit verschiedenen Mittenrauwerten Ra gefertigt werden können. Auf den geglätteten Oberflächen halten sich Verschmutzungen sehr schlecht, bzw. sie können mit üblichen Reinigungsverfahren (etwa Druckstrahlern oder Dampfstrahlern) leicht entfernt werden. Durch Verwendung eines metallischen Werkstoffs wird sichergestellt, dass die geforderten Rauhigkeitswerte zum einen überhaupt erreicht werden können, und zum anderen auch über längere Zeit erhalten bleiben können (im Gegensatz insbesondere zu Griffteilen aus Kunststoff, die relativ schnell verkratzen). Eine hohe Korrosionsbeständigkeit, insbesondere bei Edelstahl des Typs A3, A4 oder A5, ermöglicht die Verwendung auch aggressiverer Reinigungsmittel bzw. die Verwendung in Gegenwart von aggressiven Medien wie zitronensäurehaltigen oder phosphorsäurehaltigen Getränken.

Der geforderte Mittenrauwert Rₐ, also das arithmetische Mittel der Abweichungen von einer Mittellinie (vgl. DIN EN ISO 4287:2010), der äußeren Oberfläche des Griffteils und zumindest des Teils der äußeren Oberfläche des Befestigungsteils von 0,8 µm oder weniger, insbesondere 0,1 µm oder weniger, bevorzugt 0,04 µm oder weniger, kann durch geeignete glättende Feinbearbeitungsverfahren erreicht werden, insbesondere mechanisches Polieren und/oder elektrolytisches Polieren, so dass etwaige Rauhigkeitsspitzen der Oberflächenstruktur, insbesondere Dreh-, Fräs- und Ziehriefen, sowie Eindrücke und Vertiefungen, hervorgerufen durch anderweitige Bearbeitungsschritte, weitestgehend geebnet sind.

Erfindungsgemäß wird der Handgriff geschlossen ausgebildet; insbesondere sind keine von außen zugängliche Hohlräume, etwa an der Unterseite des Handgriffs, vorhanden. Der Klemmhebel ist insgesamt im Außenbereich im Wesentlichen ohne Absätze, Spalt- oder Toträume ausgebildet. Dadurch wird die Ansammlung von Verschmutzungen, die für eine Reinigung nicht oder nur schwer zugänglich sind und die potentielle Keimquellen darstellen, verhindert.

Der geschlossen ausgebildete, hülsenförmige Ansatz verhindert zusammen mit der Dichtung, dass Verschmutzungen in den Aufnahmeraum, bzw. allgemein ins Innere des hülsenförmigen Ansatzes gelangen können. Die Einführöffnung wird vom Befestigungsteil zusammen mit der Dichtung vollständig verschlossen.

Um die Dichtung direkt an der Einführöffnung zu ermöglichen, erfolgt die Befestigung des Befestigungsteils im hülsenförmigen Ansatz mit einem Spannring, der in eine Nut, in der Regel eine umlaufende Nut, des Aufnahmeraums eingelegt ist. Diese Nut ist gegenüber der Einführöffnung (und der Dichtung) axial nach innen zurückgesetzt. Das Befestigungsteil hintergreift im montierten Zustand mit einer Rastkante, typischerweise einer umlaufenden Rastkante, den Spannring. Bei dieser Bauform ist ein schlecht abzudichtender Anschlag für das Befestigungsteil am Rand der Einführöffnung des hülsenförmigen Ansatzes nicht erforderlich.

Das Befestigungsteil wird bestimmungsgemäß an einem oder mehreren Bauteilen angelegt bzw. befestigt, typischerweise wobei auch ein oder mehrere Bauteile durchragt werden. Der Klemmhebel wird in der Eingriffsstellung durch Drehen des Griffteils (und damit des Befestigungsteils) gegenüber einem oder mehreren Bauteilen verspannt. Das Befestigungsteil ist typischerweise näherungsweise bolzenförmig ausgebildet, mit einem runden Querschnitt passend zum runden Querschnitt des Aufnahmeraums. Das Befestigungsteil ist meist mit einem Außengewinde versehen; alternativ ist auch ein Innengewinde oder eine andere Befestigungseinrichtung möglich. Die Befestigung erfolgt meist an oder in einer Struktur jenseits des einen oder der mehreren befestigten Bauteile, beispielsweise wobei das Befestigungsteil in die Struktur eingeschraubt ist. Ebenso ist es möglich, das Befestigungsteil in eine Mutter, insbesondere Hutmutter, einzuschrauben.

### Bevorzugte Ausführungsformen der Erfindung

Besonders bevorzugt ist eine Ausführungsform eines erfindungsgemäßen Klemmhebels, bei der die äußere Oberfläche des Griffteils in allen konkav gekrümmten Bereichen einen lokalen Krümmungsradius von wenigstens 5 mm aufweist, insbesondere wobei die äußere Oberfläche des Griffteils auch in allen konvex gekrümmten Bereichen einen lokalen Krümmungsradius von wenigstens 5 mm aufweist. Dadurch, dass die Oberfläche betragsmäßig lediglich vergleichsweise große Krümmungsradien aufweist, ist die Oberfläche des Griffteils überall gut zugänglich, insbesondere für Reinigungszwecke. Enge oder schmale Hohlräume und Spalten, in denen sich Schmutz ansammeln könnte, treten nicht auf.

Vorteilhaft ist weiterhin eine Ausführungsform, bei der die Dichtung eine gekrümmte oder schräg zur Außenseite des Befestigungsteils verlaufende Vorderkante aufweist, wobei sich die Dichtung im Bereich der Vorderkante vom Griffteil weg verjüngt. Die Dichtung wirkt dann als so genannte vorauseilende Dichtung, welche Verschmutzungen auf dem Befestigungsteil (welches in dem mit der Dichtung in Berührung kommenden Abschnitt bevorzugt kreiszylindrisch ausgebildet ist) bei beim axialen Einfahren des Befestigungsteils in den hülsenförmigen Ansatz vom hülsenförmigen Ansatz wegschiebt.

Besonders bevorzugt ist eine Ausführungsform, bei der die Dichtung an einer umlaufenden Kante der Einführöffnung stufenlos anliegt. Dadurch wird ein Spaltraum, in welchem sich Schmutz ansammeln könnte, vermieden. Man beachte, dass eine stufenlose Anlage der Dichtung durch eine Abrundung der umlaufenden Kante der Einführöffnung erleichtert wird.

Vorteilhaft ist weiterhin eine Ausführungsform, bei der das Befestigungsteil oberenends eine Außenzahnung und der hülsenartige Ansatz im Aufnahmeraum eine Innenzahnung zur drehfesten Kopplung in der Eingriffsstellung aufweist. Über die Außenzahnung und die Innenzahnung lassen sich Kopplungen in einer Vielzahl von eng beieinander liegenden Verdrehstellungen von Befestigungsteil und Griffteil einrichten. Ebenso sind die Zahnungen mechanisch recht robust.

Bei einer bevorzugten Ausführungsform weist das Befestigungsteil von der Rastkante nach oben weg einen sich verjüngenden Abschnitt auf. Dies erleichtert die Montage des Befestigungsteils (nach dem Einsetzten der Dichtung) im hülsenförmigen Ansatz. Mit dem sich verjüngenden Abschnitt kann man leicht in den in der Nut einliegenden Spannring einfahren und diesen dann elastisch aufspreizen.

Vorteilhafter Weise ist bei einer Ausführungsform vorgesehen, dass das Befestigungsteil gegenüber dem Griffteil durch Federkraft in die freigegebene Stellung oder die Eingriffsstellung vorgespannt ist, insbesondere durch eine Druckfeder, die zwischen dem Befestigungsteil und einem Grund des hülsenförmigen Ansatzes angeordnet ist. Die Vorspannung erleichtert die Bedienung des erfindungsgemäßen Klemmhebels, insbesondere bezüglich eines Wechsels zwischen freigegebener Stellung und Eingriffsstellung.

Bei einer bevorzugten Weiterbildung dieser Ausführungsform ist das Befestigungsteil durch Federkraft in die freigegebene Stellung vorgespannt, wobei das Befestigungsteil in der freigegebenen Stellung maximal aus dem hülsenartigen Ansatz ausgefahren ist. Durch eine Vorspannung in die freigegebene Stellung wird ein unbeabsichtigtes Lösen der Verspannung des Klemmhebels, etwa bei unbeabsichtigtem Drehen des Griffteils, vermieden. Zudem wird die Kopplung von Griffteil und Befestigungsteil (etwa eine Verzahnung) in der vorgespannten, freigegebenen Stellung nicht belastet, etwa durch Vibrationen, was den Verschleiß verringert. Durch Drücken des Klemmhebels kann dieser leicht in die Eingriffsstellung überführt werden. Es ist allerdings auch alternativ möglich, den Klemmhebel in die freigegebene Stellung vorzuspannen, wobei das Befestigungsteil in der freigegebenen Stellung maximal in den hülsenartigen Ansatz eingefahren ist; in diesem Fall muss am Griffteil gezogen werden, um in die Eingriffsstellung zu gelangen.

Besonders bevorzugt ist eine Ausführungsform, bei der zumindest der Teil der äußeren Oberfläche des Befestigungsteils einen niedrigeren Mittenrauwert Ra als die äußere Oberfläche des Griffteils aufweist, insbesondere wobei zumindest der Teil der äußeren Oberfläche des Befestigungsteils einen Mittenrauwert Ra von 0,04 µm oder weniger aufweist. Am Befestigungsteil können Dichtungen anliegen, die beispielsweise beim Festziehen des Klemmhebels an einer Fläche des Befestigungsteils abgleiten. Diese Anlageflächen sollten besonders glatt sein, um einen Eintrag bzw. Verbleib von Verschmutzungen zwischen der Dichtung und der Anlagefläche zu vermeiden. Daher ist an diesen Anlageflächen eine besonders geringe Rauigkeit vorteilhaft. Im Gegensatz dazu reicht an der Oberfläche des Griffteils, insbesondere des Handgriffs, meist bereits eine weniger strenge Rauhigkeitsgrenze aus.

Bevorzugt ist weiterhin eine Ausführungsform, die vorsieht, dass das Befestigungsteil unterenends einen mit einem Außengewinde versehenen Schaftabschnitt aufweist, und das Befestigungsteil weiterhin außerhalb des hülsenförmigen Ansatzes eine ringförmige Stützfläche, die senkrecht zur axialen Verfahrrichtung des Befestigungsteils verläuft und dem Schaftabschnitt zugewandt ist, aufweist, insbesondere wobei die ringförmige Stützfläche einen kegelförmigen Abschnitt des Befestigungsteils begrenzt. Das Außengewinde ist gut zur Befestigung des Befestigungsteils an einer Struktur geeignet. Auf den Schaft des Befestigungsteils kann eine Dichtscheibe aufgesteckt werden, die gegen die ringförmige Stützfläche gedrückt werden kann, um Schaft bzw. eine darum herum liegende Bohrung eines Bauteil abzudichten. Der kegelförmige Abschnitt optimiert den Krafteintrag und ist darüber hinaus leicht zu reinigen. Die Stützfläche geht bevorzugt nach außen in eine Rundung über, insbesondere zum kegelförmigen Abschnitt hin; dies erleichtert eine stufenlose Anlage des Dichtkörpers der Dichtscheibe. Zum Schaft hin geht die Stützfläche bevorzugt in einen konischen Ansatz über, mit dem die Dichtscheibe am Schaft selbsttätig zentriert wird.

In einer bevorzugten Weiterbildung dieser Ausführungsform ist zwischen dem Schaftabschnitt und der ringförmigen Stützfläche ein weiterer, gewindeloser Schaftabschnitt vorgesehen ist, insbesondere wobei der Teil der äußeren Oberfläche des Befestigungsteils mit einem Mittenrauwert Ra von 0,8 µm oder weniger vom oberen Ende des Befestigungsteils bis einschließlich des weiteren Schaftabschnitts reicht. Der weitere, gewindelose Schaftabschnitt ist besser zu reinigen als der gewindebehaftete Schaftabschnitt; am gewindelosen Schaftabschnitt kann auch eine Dichtscheibe besser anliegen als an einem gewindebehafteten Schaftabschnitt.

In den Rahmen der vorliegenden Erfindung fällt auch ein Klemmhebel-System, umfassend
- einen erfindungsgemäßen, oben beschriebenen Klemmhebel, und
- wenigstens eine Dichtscheibe mit einer Metallscheibe und einem umlaufenden Dichtkörper aus elastischem Material, insbesondere aus EPDM, wobei der umlaufende Dichtkörper im entspannten Zustand gegenüber der Metallscheibe axial beidseitig übersteht. Mit der Dichtscheibe kann das Befestigungsteil gegen ein Bauteil abgedichtet werden, wobei die Dichtscheibe an der ringförmigen Stützfläche anliegt. Die axiale Dicke der Metallscheibe begrenzt dabei die Verformung des Dichtkörpers, so dass der Dichtkörper beim Verspannen des Klemmhebels nicht beschädigt wird. Bevorzugt weist der Dichtkörper im entspannten Zustand einen im Wesentlichen trapezförmigen Querschnitt auf, wobei sich der Dichtkörper radial nach außen hin in axialer Richtung verbreitert. Der Dichtkörper kann sich dann im verpressten Zustand stufenlos an eine Rundung, in die die Stützfläche nach außen hin übergeht, anlegen und axial von der Stützfläche weg in radialer Richtung verbreitern. Dadurch werden Spalt- und Toträume effizient vermieden.

Bei einer bevorzugten Ausführungsform des erfindungsgemäßen KlemmhebelSystems umfasst das Klemmhebel-System weiterhin
- eine Mutter, insbesondere Hutmutter, mit Innengewinde, in welches das Außengewinde des Schaftabschnitts einschraubbar ist,
insbesondere wobei die Mutter aus einem metallischen Werkstoff gefertigt ist, bevorzugt einem Edelstahl des Typs A1, A2, A3, A4 oder A5, und die äußere Oberfläche der Mutter einen Mittenrauwert Ra von 0,8 µm oder weniger, bevorzugt 0,1 µm oder weniger, aufweist. Die Mutter kann als Kontermittel für ein Verspannen des Klemmhebels mit dem Außengewinde des Befestigungsteils genutzt werden. Die Mutter ist bevorzugt von der Oberflächenbehandlung her für Umgebungen mit erhöhten Hygieneanforderungen geeignet. Die Oberflächenbehandlung der Mutter kann analog zur Oberflächenbehandlung des Griffteils oder des Befestigungsteils des Klemmhebels erfolgen.

### Verfahren zur Herstellung eines erfindungsgemäßen Klemmhebels

In den Rahmen der vorliegenden Erfindung fällt auch ein Verfahren zur Herstellung eines oben beschriebenen, erfindungsgemäßen Klemmhebels, mit folgenden Schritten:
a) Fertigung des Griffteils mit Aufnahmeraum und Fertigung des Befestigungsteils,
b) Einbringen der Nut im Aufnahmeraum des hülsenartigen Ansatzes;
c) Polieren der äußeren Oberfläche des Griffteils und zumindest des Teils der äußeren Oberfläche des Befestigungsteils mit einem Mittenrauwert Ra von 0,8 µm oder weniger, bevorzugt 0,1 µm oder weniger;
d) Einsetzen des Spannrings, wobei der Spannring in einem elastisch gestauchten Zustand von der Einführöffnung bis zur Nut geschoben wird, und Einsetzten der Dichtung;
e) Einschieben des Befestigungsteils durch die Einführöffnung in den Aufnahmeraum, bis die Rastkante hinter dem Spannring verrastet ist. Auf diese Weise kann ein erfindungsgemäßer Klemmhebel effizient gefertigt werden.

Bei einer bevorzugten Variante des erfindungsgemäßen Verfahrens wird in Schritt a) das Griffteil mit Aufnahmeraum durch Edelstahl-Feinguss gefertigt, wobei auch eine Innenzahnung im Aufnahmeraum erhalten wird. Dies hat sich in der Praxis bewährt.

Bei einer besonders bevorzugten Variante ist vorgesehen, dass in Schritt c) das Griffteil und das Befestigungsteil getrennt voneinander oder zusammen einer Oberflächenbehandlung unterzogen werden, mit folgenden Schritten:
aa) Das Griffteil und das Befestigungsteil werden einem ersten Poliervorgang unterzogen, wobei das Griffteil und das Befestigungsteil, polygone Schleifkörper, insbesondere mit Linienradien zwischen 1 mm und 6 mm, Polierpaste und Petroleum in einen Behälter, insbesondere einen Schwingförderer, eingefüllt sind und wenigstens 8 Stunden, insbesondere wenigstens 12 Stunden, durchmischt werden, wobei während des Durchmischens Polierpaste wiederholt nachgefüllt wird;
bb) Das Griffteil und das Bearbeitungsteil werden gewaschen;
cc) Das Griffteil und das Bearbeitungsteil werden einem letzten Poliervorgang unterzogen, wobei das Griffteil und das Bearbeitungsteil, eine Mischung organischer Trägermaterialien unterschiedlicher Härte, ein mineralisches Öl und Graphitpulver in einen Behälter, insbesondere einen Schwingförderer, eingefüllt sind und wenigstens 2 Stunden, insbesondere wenigstens 3 Stunden, durchmischt werden;
dd) Das Griffteil und das Befestigungsteil werden gewaschen. Mit diesem wenigstens zweistufigen, mechanischem Polieren sind Griffteile und Befestigungsteile mit einer Mittenrautiefe von bis zu 0,04µm oder noch besser auf vergleichsweise einfache Weise erhältlich.

Vorteilhafter Weise sieht eine Weiterentwicklung der obigen Variante vor, dass in Schritt cc) die organischen Trägermaterialien Getreidedreschabfälle, Maisstärke und Holzpartikel umfassen, insbesondere mit Teileabmessungen in den organischen Trägermaterialien von maximal 3 mm. Diese organischen Trägermaterialien sind gut erhältlich und weisen eine für das mechanische Endpolieren gut geeignete Härteverteilung auf.

Besonders bevorzugt ist eine Weiterentwicklung der obigen Variante, bei der mit dem Griffteil und/oder dem Befestigungsteil, insbesondere nur mit dem Befestigungsteil, zwischen den Schritten bb) und cc) weiterhin folgende Schritte stattfinden:
bb') Das Griffteil und/oder das Befestigungsteil werden einem mittleren Poliervorgang unterzogen, wobei das Griffteil und/oder das Befestigungsteil, zylindrische Schleifkörper, insbesondere mit einem Durchmesser zwischen 3 mm und 6 mm und einer Länge zwischen 8 mm und 12 mm, Polierpaste mit einer feineren Körnung als in Schritt aa) und Petroleum in einen Behälter, insbesondere einen Schwingförderer, eingefüllt sind und wenigstens 8 Stunden, insbesondere wenigstens 12 Stunden, durchmischt werden, wobei während des Durchmischens Polierpaste wiederholt nachgefüllt wird;
bb") Das Griffteil und/oder das Befestigungsteil werden gewaschen. Der mittlere Poliervorgang kann die Oberflächenrauigkeit gegenüber dem ersten Poliervorgang nochmals merklich absenken.

### Verwendung in hygienisch überwachten Bereichen

Schließlich fällt noch in den Rahmen der vorliegenden Erfindung die Verwendung eines erfindungsgemäßen Klemmhebels oder eines erfindungsgemäßen Klemmhebelsystems in einem hygienisch überwachten Bereich, insbesondere in der Lebensmittelindustrie, in der Getränkeherstellung, in der pharmazeutischen Industrie und/oder in der medizintechnischen Industrie. In diesen Zweigen der Technik sind hygienisch einwandfreie Arbeitsbedingungen besonders wichtig, so dass die Vorteile der Erfindung voll zur Geltung kommen. Der Klemmhebel und die Dichtscheibe können nach Kontakt mit verschmutzenden Medien, die ohnehin schlecht an der Oberfläche des Klemmhebels haften, leicht gereinigt werden und so die erforderliche Hygiene schnell wieder hergestellt werden. Der Klemmhebel wird in der Regel als Befestigungsmittel oder Spannmittel, oder Teil eines Befestigungsmittels oder Spannmittels, in einer Maschine oder Anlage im hygienisch überwachten Bereich eingesetzt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Außenansicht einer Ausführungsform eines erfindungsgemäßen Klemmhebels;
- Fig. 2: eine schematische Querschnittsansicht des Klemmhebels von Fig. 1, in freigegebener Stellung;
- Fig. 3: eine schematische Querschnittsansicht des Klemmhebels von Fig. 1, in Eingriffsstellung;
- Fig. 4a: eine schematische, teilweise geschnittene Darstellung des Klemmhebels von Fig. 1, mit Dichtscheibe und einem Bauteil, das mittels des Klemmhebels an einer Struktur verklemmt ist;
- Fig. 4b: eine schematische, teilweise geschnittene Darstellung des Klemmhebels ähnlich wie in Fig. 1 gezeigt, mit zwei Dichtscheiben und einer Hutmutter sowie zwei Bauteilen, die mittels des Klemmhebels und der Hutmutter miteinander verklemmt sind;
- Fig. 5: eine schematische Querschnittsdarstellung eines teilweise montierten, erfindungsgemäßen Klemmhebels, mit eingesetztem Spannring und eingesetzter Dichtung;
- Fig. 6: eine schematische Querschnittsdarstellung eines teilweise montierten, erfindungsgemäßen Klemmhebels, mit teilweise eingeschobenem Befestigungsteil;
- Fig. 7: schematische Illustration zur Oberflächenbehandlung von Griffteilen und Befestigungsteilen gemäß der Erfindung, mit einem ersten Poliervorgang (Teilbild A), einem optionalen mittleren Poliervorgang (Teilbild B) und einem letzten Poliervorgang (Teilbild C).

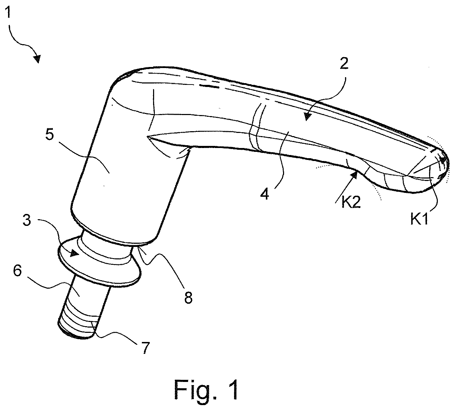

Die **Fig. 1** illustriert in einer schematischen Perspektivansicht eine Ausführungsform eines erfindungsgemäßen Klemmhebels 1. Der Klemmhebel 1 umfasst ein Griffteil 2 und ein am Griffteil 1 gelagertes Befestigungsteil 3.

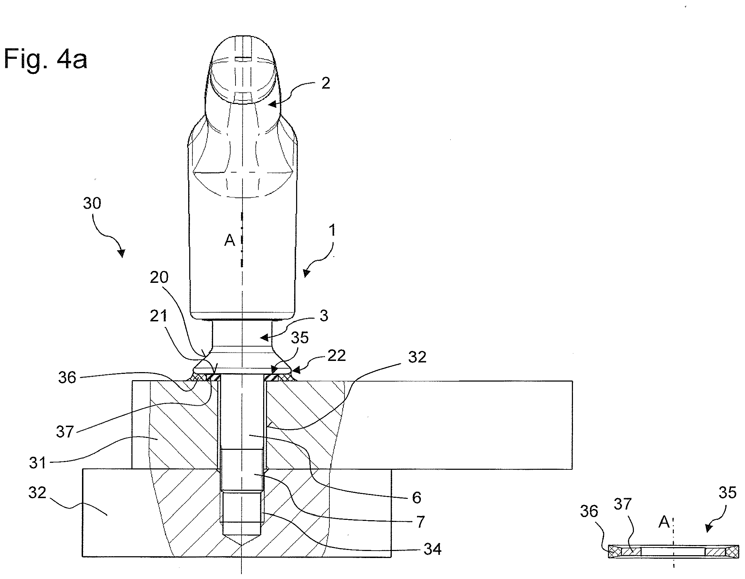

Das Befestigungsteil 3 ist mit einem oberen Abschnitt in einen hülsenförmigen Ansatz 5 des Griffteils 2 eingeschoben und dort entlang einer Achse A verschieblich, aber unverlierbar gelagert. In einer freigegebenen Stellung, d. h. freigegebenen axialen Verschiebeposition des Befestigungsteils 3, ist das Griffteil 2 gegenüber dem Befestigungsteil 3 bezüglich der Achse A frei drehbar. In einer Eingriffsstellung, d.h. einer eingreifenden axialen Verschiebestellung des Befestigungsteils 3, ist das Griffteil 2 drehfest mit dem Befestigungsteil 3 gekoppelt; dann kann das Befestigungsteil 3 durch Drehen des Griffteils 2 mittels dessen Handgriffs 4 um die Achse A gedreht werden, um ein Bauteil zu verspannen. Dafür kann beispielsweise das Bauteil mit einem Schaft 6 des Befestigungsteils 3 durchragt werden, und der Schaft 6 mit seinem mit Außengewinde versehenen Schaftabschnitt 7 in eine Struktur eingeschraubt werden (vgl. dazu Fig. 4a).

Die äußere Oberfläche des Griffteils 2 und zumindest Teile des Befestigungsteils 3 (etwa komplett oberhalb des Außengewindes 7) sind auf eine Mittenrautiefe Ra von 0,8 µm oder weniger, bevorzugt 0,1µm oder weniger, poliert. Das einstückige Griffteil 2 und auch das Befestigungsteil 2 sind hier aus Edelstahl gefertigt, beispielsweise vom Typ A4. Der Handgriff 4 ist geschlossen ausgebildet, und auch der hülsenartige Ansatz 5 weist, mit Ausnahme einer Aufnahmeöffnung 8 (weitgehend verdeckt in Fig. 1) für das Befestigungsteil 3, keine Öffnungen auf. Die äußeren Konturen des Griffteils 2 sind gerundet, so dass der Krümmungsradius überall wenigstens 5 mm beträgt. Beispielhaft sind der Krümmungsradius K1 für einen der am stärksten konvex gekrümmten Bereiche des Griffteils 1, nämlich am äußeren Ende des Handgriffs 4, und der Krümmungsradius K2 für einen der am stärksten konkav gekrümmten Bereiche des Griffteils 2, nämlich vor einem unterseitigen Endwulst des Handgriffs 4, eingezeichnet. Der Krümmungsradius K1 beträgt im gezeigten Ausführungsbeispiel ca. 5 mm, und der Krümmungsradius K2 ca. 7 mm.

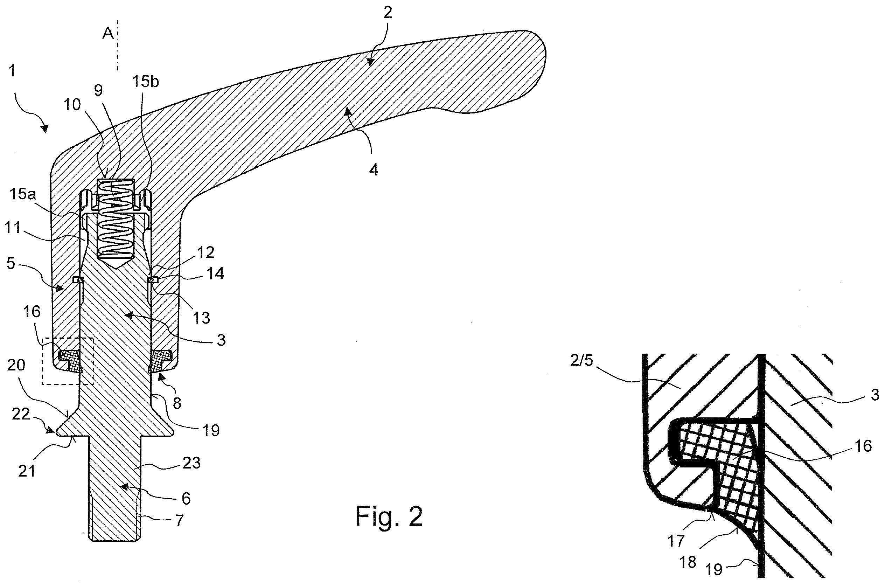

Die **Fig. 2** zeigt den Klemmhebel 1 von Fig. 1 nun in einem Querschnitt, mit dem Befestigungsteil 3 in einer freigegebenen Stellung.

Das Griffteil 2 umschließt mit seinem hülsenförmigen Ansatz 5 kappenartig den oberen Teil des Befestigungsteils 3. Das Befestigungsteil 3 wird mit einer Druckfeder 9, die am Grund 10 des hülsenförmigen Ansatzes 5 anliegt, in Richtung aus dem vom hülsenförmigen Ansatz 5 ausgebildeten Aufnahmeraum 11 heraus gedrückt, also in Fig. 2 nach unten. Am Befestigungsteil 3 ist jedoch eine umlaufende Rastkante (Rastnase) 12 ausgebildet, die einen Spannring 13 hintergreift. Der Spannring 13 liegt wiederum mit einem Teil seines Querschnitts in einer umlaufenden Nut 14 an der Innenseite des hülsenförmigen Ansatzes 5 ein. Entsprechend bilden die Rastkante 12 und der Spannring 13 einen axialen Anschlag für das Befestigungsteil 3 aus, so dass dieses maximal bis in die in Fig. 2 gezeigte Stellung axial ausfahren kann.

Am oberen Ende des Befestigungsteils 3 ist eine Außenverzahnung 15a ausgebildet. In der gezeigten axialen Verfahrstellung ist diese außer Eingriff bezüglich einer Innenverzahnung 15b am oberen Ende des Aufnahmeraums 11 des Griffteils 2. Entsprechend können das Griffteil 2 und das Befestigungsteil 3 bezüglich der Achse A frei gegeneinander rotieren.

Im Bereich der Einführöffnung 8 zum Aufnahmeraum 11 ist eine Dichtung 16 angeordnet. Diese dichtet den Aufnahmeraum 11 gegenüber der Umgebung ab. Im Hauptbild der Figur 2 ist die Dichtung 16 in einem entspannten Zustand gezeigt, was angesichts des eingeschobenen Befestigungsteils 3 nicht die Realität wiedergibt. Im Zusatzbild der Figur 2 rechts unten ist eine Vergrößerung des Bereichs der Dichtung 16, mit der Dichtung 16 im verformten Zustand gezeigt, was im Wesentlichen den realen geometrischen Verhältnissen des vollständig montierten Klemmhebels 1 entspricht. Die Dichtung 16 liegt außen an einer umlaufenden Kante 17 der Einführöffnung stufenlos, also ohne Absatz und ohne merklichen Spalt, an. Innen liegt die Dichtung 16 an einem in axialer Richtung verlaufenden, kreiszylindrischen Abschnitt 19 des Befestigungsteils 3 an. Eine Vorderkante 18 der Dichtung 16, die hier gekrümmt verläuft, verjüngt sich dabei vom Griffteil 2 bzw. dem hülsenförmigen Ansatz 5 weg, also in Fig. 2 nach unten hin. Die Vorderkante 18 kann daher beim Einfahren des Befestigungsteils 3 weiter in den hülsenförmigen Ansatz 5 etwaige Verschmutzungen an der Außenseite des Befestigungsteils 3 vor sich her schieben.

Unterhalb des kreiszylindrischen Schaftabschnitts 19 ist in der gezeigten Ausführungsform am Befestigungsteil 3 ein kegelförmiger Abschnitt 20 ausgebildet, an dessen Unterseite eine ringförmige Stützfläche 21 ausgebildet ist. Der Übergang des kegelförmigen Abschnitts 20 zur Stützfläche 21 ist durch eine Rundung 22 ausgebildet. Zwischen der ringförmigen Stützfläche 21 und dem mit einem Außengewinde versehenen Schaftabschnitt 7 ist hier noch ein weiterer, gewindefreier Schaftabschnitt 23 am Schaft 6 vorgesehen.

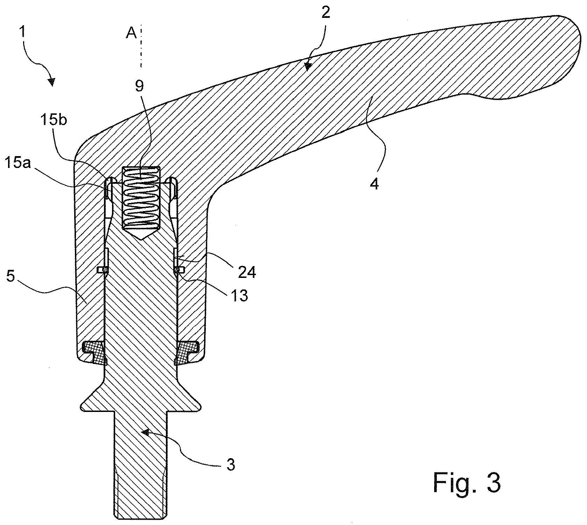

**Fig. 3** zeigt den Klemmhebel 1 von Fig. 1 in Eingriffsstellung; diese kann beispielsweise dadurch eingenommen werden, dass der Handgriff 4 des Griffteils 2 auf das Befestigungsteil 3 zu, also in Fig. 3 nach unten gedrückt wird. Das Befestigungsteil 3 fährt dann weiter in den hülsenförmigen Ansatz 5 ein, wobei die Druckfeder 9 gestaucht wird.

Dabei gerät die Innenverzahnung 15b des Griffteils 2 in Eingriff mit der Außenverzahnung 15a des Befestigungsteils 3. Am Befestigungsteil 3 ist eine Einschnürung 24 vorgesehen, an der der Spannring 13 entlanggleiten kann, so dass dieser die axiale Verfahrbewegung nicht behindert. In der in Fig. 3 gezeigten Stellung wird dann eine Drehbewegung des Griffteils 2 um die Achse A vom Befestigungsteil 3 mitvollzogen. Dies wird für das Verklemmen (Verspannen) bzw. Entklemmen (Entspannen) von Bauteilen ausgenutzt.

Sobald das Griffteil 2 nicht mehr nach unten gedrückt wird, nimmt der Klemmhebel 1 selbsttätig wieder die freigegebene Stellung von Fig. 2 ein.

Die **Fig. 4a** zeigt in einer teilweise geschnittenen Ansicht die Verwendung des Klemmhebels 1 aus Fig. 1-3 in einem Klemmhebel-System 30, das zum Verspannen eines Bauteils 31 eingesetzt wird. Das Klemmhebel-System 30 umfasst den Klemmhebel 1 und zumindest eine Dichtscheibe 35.

Das verspannte Bauteil 31 weist eine zentrale Bohrung 32 auf, die vom Schaft 6 des Befestigungsteils 3 durchragt wird. Unterhalb des Bauteils 31 ist eine Struktur 33 angeordnet, die mit einem Innengewinde 34 versehen ist. In dieses Innengewinde 34 ist der mit einem Außengewinde versehene Schaftabschnitt 7 des Schafts 6 (hier teilweise) eingeschraubt.

Zwischen der Oberseite des Bauteils 31 und der ringförmigen Stützfläche 21 des Befestigungsteils 3 ist eine Dichtscheibe 35 angeordnet.

Im entspannten Zustand der Dichtscheibe 35, vgl. das Zusatzbild rechts unten in Fig. 4a, überragt ein umlaufender Dichtkörper 36 aus Elastomer-Material axial beiderseits eine Metallscheibe 37, auf der der Dichtkörper 36 aufvulkanisiert ist; der Dichtkörper 36 weist hierbei einen näherungsweise trapezförmigen Querschnitt auf, wobei die axiale Dicke in Richtung radial nach außen zunimmt.

Im zusammengepressten Zustand der Dichtscheibe 35, vgl. das Hauptbild der Fig. 4a, wird der Dichtkörper 36 auf die axiale Dicke der Metallscheibe 37 zusammengepresst; die axiale Dicke der Metallscheibe 37 begrenzt die Stauchung des Dichtkörpers 36. Material des Dichtkörpers 36 wird dabei radial nach außen gedrückt. Durch die Rundung 22 am Übergang der ringförmigen Stützfläche 21 zum kegelförmigen Abschnitt 20 einerseits und die trapezförmige Grundform des Dichtkörpers 36 andererseits kann eine stufenlose Anlage des Dichtkörpers 36 an das Befestigungsteil 3 im Bereich des unteren Endes des kegelförmigen Abschnitts 20 erfolgen. Weiterhin verbreitert sich der Dichtkörper 36 in Richtung nach unten auf das Bauteil 31 zu, wodurch ein totraumfreier Übergang zur Oberseite des Bauteil 31 erreicht wird.

Um das Bauteil 31 zu lösen, kann das Griffteil 2 nach unten gedrückt werden, und der Schaft 6 mit dem Griffteil 2 aus der Struktur 33 herausgeschraubt werden; für ein Verklemmen des Bauteils 31 kann umgekehrt der Schaft 6 mit dem Griffteil 2 in die Struktur 33 hineingeschraubt werden. Wenn das Griffteil 2 nicht eingedrückt ist, hat ein Drehen des Griffteils 2 um die Achse A keine Auswirkung auf das Befestigungsteil 3 bzw. dessen Schaft 6, und damit auch keine Auswirkung auf die Verklemmung des Bauteils 31.

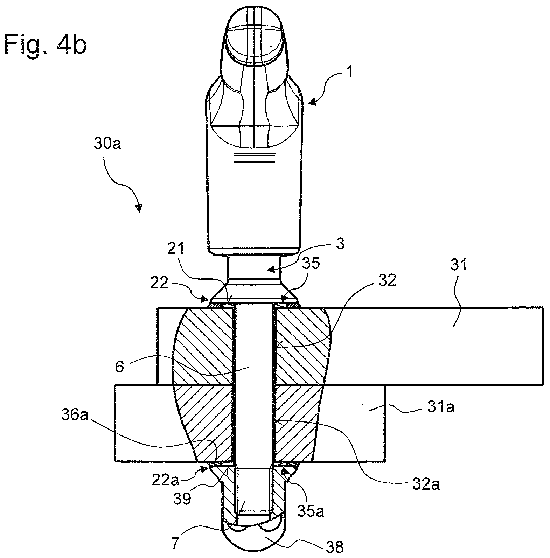

Die **Fig. 4b** zeigt in teilweise geschnittener Darstellung ein weiteres erfindungsgemäßes Klemmhebel-System 30a, welches einen Klemmhebel 1 ähnlich wie in Fig. 1-3 gezeigt, jedoch mit längerem Schaft 6, weiterhin zwei Dichtscheiben 35, 35a wie in Fig. 4a erläutert und eine Mutter 38, hier eine Hutmutter, umfasst. Mit dem Klemmhebel-System 30a werden in der gezeigten Ausführungsform zwei Bauteile 31, 31a miteinander verspannt.

Dazu durchragt der Schaft 6 des Befestigungsteils 3 des Klemmhebels 1 die Bohrungen 32, 32a der Bauteile 31, 31a. Ein unterer Teil des Schafts 6, hier der gesamte mit einem Außengewinde versehene Schaftabschnitt 7, ist in das Innengewinde der Mutter 38 eingeschraubt.

Zwischen der ringförmigen Stützfläche 21 des Befestigungsteils 3 und der Oberseite des Bauteils 31 ist eine erste Dichtscheibe 35 angeordnet. Weiterhin ist zwischen der Unterseite des Bauteils 31a und einer ringförmigen Anlagefläche 39 der Mutter 38 eine zweite Dichtscheibe 35a angeordnet. Die ringförmige Anlagefläche 39 geht radial außen in eine Rundung 22a über, ähnlich wie die ringförmige Stützfläche 21 radial außen in die Rundung 22 übergeht. Dadurch kann der Dichtkörper 36a der Dichtscheibe 35a sich stufenlos an die Rundung 22a und den sich an die Rundung 22a anschließenden, hier kegelförmigen Abschnitt der Mutter 38 anlegen.

Durch die Dichtscheiben 35, 35a werden die Bohrungen 32, 32a von oben bzw. unten abgedichtet, so dass in sie kein Schmutz, und insbesondere auch keine Flüssigkeiten, eindringen können. Die Mutter 38 entspricht in der gezeigten Ausführungsform bezüglich des Mittenrauwerts ihrer äußeren Oberfläche und dem verwendeten Material dem Befestigungsteil 3.

Man beachte, dass die Mutter 38 beim Verklemmen und Lösen (Entklemmen) der Bauteile 31, 31a grundsätzlich gekontert werden muss, etwa mit einem Schrauben schlüssel.

### Fertigung eines erfindungsgemäßen Klemmhebels

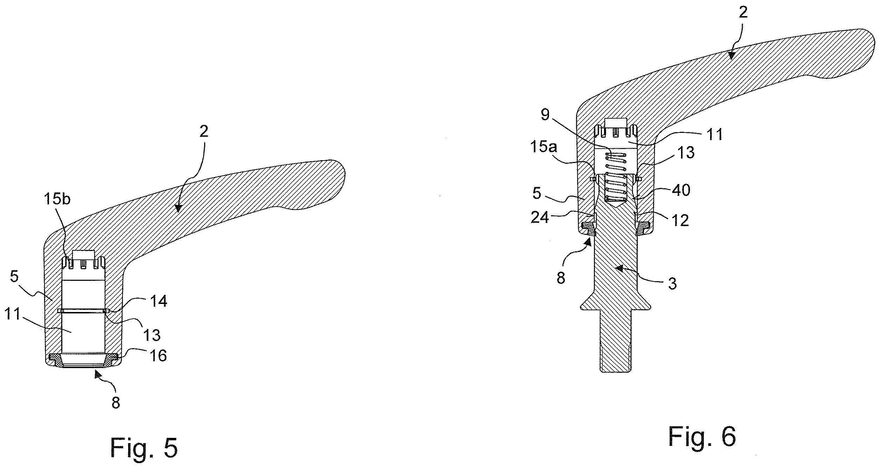

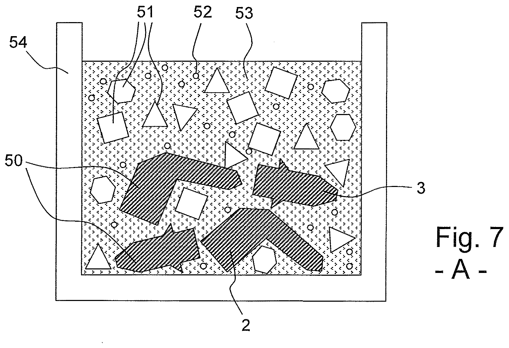

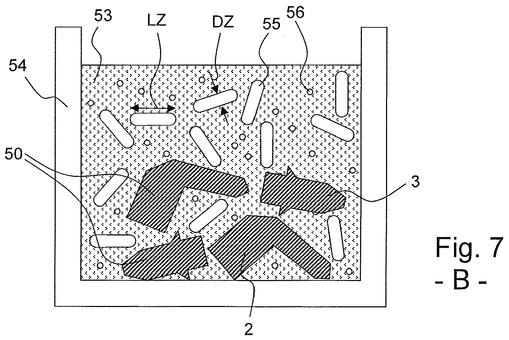

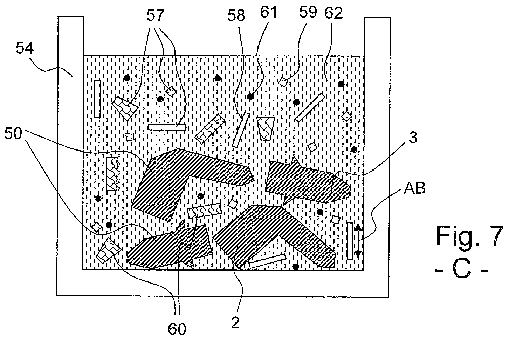

Zur Fertigung eines erfindungsgemäßen Klemmhebels wird zunächst ein Griffteil 2 hergestellt, etwa durch Edelstahl-Feinguss, vgl. **Fig. 5****,** wobei die Oberfläche dieses Griffteils zunächst noch nicht poliert und entsprechend relativ rau (uneben) ist. Dabei kann bereits die Innenverzahnung 15b gleich mit gefertigt (etwa in der Gussform mit eingearbeitet) werden. Anschließend wird eine Nut 14 im Aufnahmeraum 11 bzw. an der Innenseite des hülsenförmigen Ansatzes 5 gefräst; die Nut 14 wird in der Regel aus entformungstechnischen Gründen bei der Fertigung des Griffteils 2 nicht unmittelbar eingebracht. Anschließend wird die Oberfläche des Griffteils 2 poliert (vgl. dazu Fig. 7). Dies kann gleichzeitig mit dem Polieren der Oberfläche des Befestigungsteils 3 erfolgen (nicht in Fig. 5 dargestellt). Sodann wird der Spannring 13 in die Nut 14 eingesetzt, wobei der Spannring 13 für den Transfer zur Nut 14 elastisch gestaucht wird. Weiterhin wird die Dichtung 16 in das Griffteil 2 eingesetzt.

Anschließend wird das polierte Befestigungsteil 3 mitsamt der Druckfeder 9 durch die Einführöffnung 8 in den Aufnahmeraum 11 eingesetzt, vgl. **Fig. 6****.** Dabei wird der Spannring 13 zwischenzeitlich elastisch gespreizt, wenn die Rastkante 12 den Spannring 13 passiert. Um die Rastkante 12 leicht hinter den Spannring 13 bringen zu können, ist vor (in Fig. 6 oberhalb) der Rastkante 12 ein sich verjüngender Abschnitt 40 vorgesehen. Ebenso ist die Außenverzahnung 15a nach oben hin sich etwas verjüngend ausgebildet.

Nachdem die Rastkante 12 hinter den Spannring 13 gelangt ist, verengt sich dieser wieder etwas durch elastische Rückformung, und liegt in der Einschnürung 24 an (vgl. dazu Fig. 3). Das Griffteil 2 und das Befestigungsteil 3 können dann nicht mehr zerstörungsfrei voneinander getrennt werden.

**Fig. 7** illustriert schematisch ein Verfahren gemäß der Erfindung zur Oberflächenbehandlung von Griffteilen 2 und Befestigungsteilen 3 (im Folgenden: Metallteile 50) für einen erfindungsgemäßen Klemmhebel. Mit der erfindungsgemäßen Oberflächenbehandlung können Griffteile 2 und Befestigungsteile 3 mit einem Mittenrauwert ihrer Oberfläche von 0,8 µm oder weniger, oder sogar von 0,04 µm oder weniger (insbesondere bei Nutzung eines mittleren Polierschritts) zur Verfügung gestellt werden. Das Verfahren beruht auf einem mehrstufigen, mechanischen Polieren. Man beachte, dass in der Regel in jedem Poliervorgang mehrere Metallteile 50 gleichzeitig poliert werden, seien es Griffteile 2, Befestigungsteile 3, oder beide Arten zusammen.

In einem ersten Poliervorgang, illustriert in **Teilbild A**, werden die Metallteile 50 zusammen mit polygonen Schleifkörpern 51, insbesondere tetraedrischen, hexaedrischen (würfelförmigen) und/oder oktaedrischen Schleifkörpern, die bevorzugt aus Korund gefertigt sind, weiterhin mit Polierpaste enthaltend Schleifpartikel 52, bevorzugt aus SiC, und mit Petroleum 53, bevorzugt ein schwerflüchtiges und schwer entzündliches Petroleum, in einen Behälter 54 gegeben und durchmischt. Es hat sich bewährt, als Behälter 54 einen Schwingförderer zu wählen, und die Durchmischung durch Rütteln bzw. Schwingen des Behälters 54 einzurichten; allerdings kann alternativ auch der Behälter 54 getaumelt oder gedreht werden, oder der Inhalt gerührt werden. Das Durchmischen wird für wenigstens acht Stunden durchgeführt. Während des Durchmischens wird im Behälter 54 die Konzentration der Schleifpartikel 52 der Polierpaste kontrolliert und mehrfach korrigiert (d.h. Polierpaste wird in geeigneter Menge nachgefüllt). In Gewinden und Verzahnungen der Metallteile 50 setzen sich vor allem zu Beginn des ersten Poliervorgangs große Mengen Schleifpartikel 52 ab, die im Petroleum 53 ersetzt werden sollten, um eine gute Polierwirkung zu behalten. Bezüglich der polygonen Schleifkörper 51 hat es sich bewährt, die Linienradien, d.h. die Krümmungsradien an den Kanten, die zwei benachbarte Ecken am Schleifkörper 51 verbinden, zu 1 mm bis 6 mm zu wählen; damit können die Metallteile 50 für Hygienezwecke besonders effizient bearbeitet werden. Man beachte, dass insbesondere das optimale Verhältnis von Metallteilen 50, Schleifkörpern 51, Polierpaste und Petroleum 53, weiterhin die optimale Größe der polygonen Schleifkörper 51 oder auch der Schleifpartikel 52 in der Polierpaste sowie die optimale Dauer des ersten Poliervorgangs je nach Typ der Metallteile 50 variieren (was entsprechend auch für die nachfolgenden Poliervorgänge gilt). Anschließend werden die Metallteile 50 gewaschen (nicht näher dargestellt).

Um besonders hohe Oberflächenqualitäten zu erreichen oder für die Oberflächenbehandlung besonders schwieriger Metallteile 50 kann nun ein mittlerer Poliervorgang, vgl. **Teilbild B,** durchgeführt werden. Im Behälter 54 werden nun den Metallteilen 50 im Wesentlichen zylinderförmige Schleifkörper 55, bevorzugt mit halbkugelförmig abgerundeten Enden, zugesetzt. Typischerweise sind die Schleifkörper 55 aus sehr feinkörnigem, fast glasartigem Korund, mit einem Durchmesser DZ von 3 mm bis 6 mm und einer Länge LZ von 8 mm bis 12 mm, besonders bevorzugt 10 mm. Eine Polierpaste mit Schleifpartikeln 56 mit einer feineren Körnung als im ersten Poliervorgang und Petroleum 53 werden ebenfalls zugesetzt. Die Metallteile 50, die zylindrischen Schleifkörper 55, die Polierpaste und das Petroleum 53 werden wiederum für mindestens acht Stunden durchmischt, etwa durch Rütteln des Behälters 54. Die Konzentration der Schleifpartikel 55 der Polierpaste im Petroleum 53 wird kontrolliert und regelmäßig nachgefüllt. Anschließend werden die Metallteile 50 wiederum gewaschen (nicht näher dargestellt).

Es schließt sich ein letzter Poliervorgang an, illustriert im **Teilbild C**. In den Behälter 54 werden wiederum die Metallteile 50 eingefüllt, und weiterhin eine Mischung organischer Trägermaterialien 57 aus Feststoffteilchen unterschiedlicher Härte. Bevorzugt umfasst die Mischung von organischem Trägermaterial 57 Getreidedreschabfälle 58, Maisstärke-Partikel 59 und Holzpartikel 60. Die maximale Teilchenabmessung AB in der Mischung des organischen Trägermaterials 57 (größte Länge des jeweiligen Feststoffteilchens) sollte maximal 3 mm betragen. Weiterhin wird ein feines Graphitpulver 61 sowie ein Mineralöl 62 (etwa ein Siliconöl) zugesetzt. Der Inhalt des Behälters 54 wird für wenigstens zwei Stunden durchmischt, etwa durch Rütteln des Behälters 54. Anschließend werden die Metallteile 50 erneut gewaschen (nicht näher dargestellt).

Die Metallteile 50 besitzen schließlich eine polierte äußere Oberfläche mit einem Mittenrauwert von 0,8 µm oder besser; in der Regel wird sogar ein Mittenrauwert von 0,04 µm oder besser erreicht. Die solchermaßen behandelten Metallteile 50 dieser Oberflächengüte können in hygienisch überwachten Anwendungsbereichen eingesetzt werden.

## Patentansprüche

1. Klemmhebel (1), umfassend
- ein einstückiges Griffteil (2) mit einem hülsenförmigen Ansatz (5) und einem Handgriff (4),
- und ein Befestigungsteil (3),
wobei das Befestigungsteil (3) in einem Aufnahmeraum (11) des hülsenförmigen Ansatzes (5) axial beweglich geführt ist und zwischen einer freigegebenen Stellung, in der das Griffteil (2) gegenüber dem Befestigungsteil (3) frei drehbar ist, und einer Eingriffsstellung, in der das Befestigungsteil (3) mit dem Griffteil (2) zum Drehen des Befestigungsteils (3) mittels des Griffteils (2) gekoppelt ist, im Aufnahmeraum (11) verschiebbar ist,
wobei das Befestigungsteil (3) im Aufnahmeraum (11) des hülsenförmigen Ansatz (5) unverlierbar gehalten ist,
und wobei der hülsenförmige Ansatz (5) von einer Einführöffnung (8) des Aufnahmeraums (11) weg geschlossen ausgebildet ist und das Befestigungsteil (3) an einem oberen Ende kappenartig umgreift,
**dadurch gekennzeichnet,**
**dass** das Griffteil (2) und das Befestigungsteil (3) aus einem metallischen Werkstoff gefertigt sind, insbesondere Edelstahl des Typs A1, A2, A3, A4 oder A5,
**dass** die äußere Oberfläche des Griffteils (2) und zumindest ein Teil der äußeren Oberfläche des Befestigungsteils (3) einen Mittenrauwert Ra von 0,8 µm oder weniger, insbesondere 0,1 µm oder weniger, aufweisen, dass der Handgriff (4) geschlossen ausgebildet ist,
**dass** der Aufnahmeraum (11) des hülsenförmigen Ansatzes (5) eine Nut (14) aufweist, in welche ein Spannring (13), insbesondere ein Runddrahtring, eingelegt ist, wobei der Spannring (13) gegenüber der Nut (14) nach innen übersteht und das Befestigungsteil (3) den Spannring (13) mit einer Rastkante (12) hintergreift,
und **dass** im hülsenartigen Ansatz (5) an der Einführöffnung (8) eine Dichtung (16) aus einem elastischen Material, insbesondere EPDM, gehalten ist, wobei die Dichtung (16) am Befestigungsteil (3) anliegt und den Aufnahmeraum (11) gegen die Umgebung abdichtet.

2. Klemmhebel (1) nach Anspruch 1, **dadurch gekennzeichnet, dass** die äußere Oberfläche des Griffteils (2) in allen konkav gekrümmten Bereichen einen lokalen Krümmungsradius (K2) von wenigstens 5 mm aufweist,
insbesondere wobei die äußere Oberfläche des Griffteils (2) auch in allen konvex gekrümmten Bereichen einen lokalen Krümmungsradius (K1) von wenigstens 5 mm aufweist.

3. Klemmhebel (1) nach Anspruch 1 oder 2, **dadurch gekennzeichnet, dass** die Dichtung (16) eine gekrümmte oder schräg zur Außenseite des Befestigungsteils (3) verlaufende Vorderkante (18) aufweist, wobei sich die Dichtung (16) im Bereich der Vorderkante (18) vom Griffteil (2) weg verjüngt.

4. Klemmhebel (1) nach einem der vorhergehenden Ansprüche, **dadurch gekennzeichnet, dass** die Dichtung (16) an einer umlaufenden Kante (17) der Einführöffnung (8) stufenlos anliegt.

5. Klemmhebel (1) nach einem der vorhergehenden Ansprüche, **dadurch gekennzeichnet, dass** das Befestigungsteil (3) oberenends eine Außenzahnung (15a) und der hülsenartige Ansatz (5) im Aufnahmeraum (11) eine Innenzahnung (15b) zur drehfesten Kopplung in der Eingriffsstellung aufweist.

6. Klemmhebel (1) nach einem der vorhergehenden Ansprüche, **dadurch gekennzeichnet, dass** das Befestigungsteil (3) von der Rastkante (12) nach oben weg einen sich verjüngenden Abschnitt (40) aufweist.

7. Klemmhebel (1) nach einem der vorhergehenden Ansprüche, **dadurch gekennzeichnet, dass** das Befestigungsteil (3) gegenüber dem Griffteil (2) durch Federkraft in die freigegebene Stellung oder die Eingriffsstellung vorgespannt ist,
insbesondere durch eine Druckfeder (9), die zwischen dem Befestigungsteil (3) und einem Grund (10) des hülsenförmigen Ansatzes (5) angeordnet ist.

8. Klemmhebel (1) nach Anspruch 7, **dadurch gekennzeichnet, dass** das Befestigungsteil (3) durch Federkraft in die freigegebene Stellung vorgespannt ist, wobei das Befestigungsteil (3) in der freigegebenen Stellung maximal aus dem hülsenartigen Ansatz (5) ausgefahren ist.

9. Klemmhebel (1) nach einem der vorhergehenden Ansprüche, **dadurch gekennzeichnet, dass** zumindest der Teil der äußeren Oberfläche des Befestigungsteils (3) einen niedrigeren Mittenrauwert Ra als die äußere Oberfläche des Griffteils (2) aufweist,
insbesondere wobei zumindest der Teil der äußeren Oberfläche des Befestigungsteils (3) einen Mittenrauwert Ra von 0,04 µm oder weniger aufweist.

10. Klemmhebel (1) nach einem der vorhergehenden Ansprüche, **dadurch gekennzeichnet, dass** das Befestigungsteil (3) unterenends einen mit einem Außengewinde versehenen Schaftabschnitt (7) aufweist, und das Befestigungsteil (3) weiterhin außerhalb des hülsenförmigen Ansatzes (5) eine ringförmige Stützfläche (21), die senkrecht zur axialen Verfahrrichtung (A) des Befestigungsteils (3) verläuft und dem Schaftabschnitt (7) zugewandt ist, aufweist,
insbesondere wobei die ringförmige Stützfläche (21) einen kegelförmigen Abschnitt (20) des Befestigungsteils (3) begrenzt.

11. Klemmhebel (1) nach Anspruch 10, **dadurch gekennzeichnet, dass** zwischen dem Schaftabschnitt (7) und der ringförmigen Stützfläche (21) ein weiterer, gewindeloser Schaftabschnitt (23) vorgesehen ist, insbesondere wobei der Teil der äußeren Oberfläche des Befestigungsteils (3) mit einem Mittenrauwert Ra von 0,8 µm oder weniger vom oberen Ende des Befestigungsteils (3) bis einschließlich des weiteren Schaftabschnitts (23) reicht.

12. Klemmhebel-System (30; 30a), umfassend
- einen Klemmhebel (1) nach Anspruch 10 oder 11, und
- wenigstens eine Dichtscheibe (35; 35a) mit einer Metallscheibe (37) und einem umlaufenden Dichtkörper (36; 36a) aus elastischem Material, insbesondere aus EPDM, wobei der umlaufende Dichtkörper (36; 36a) im entspannten Zustand gegenüber der Metallscheibe (37) axial beidseitig übersteht.

13. Klemmhebel-System (30; 30a) nach Anspruch 12, wobei das Klemmhebel-System (30; 30a) weiterhin umfasst
- eine Mutter (38), insbesondere Hutmutter, mit Innengewinde, in welches das Außengewinde des Schaftabschnitts (7) einschraubbar ist, insbesondere wobei die Mutter (38) aus einem metallischen Werkstoff gefertigt ist, bevorzugt einem Edelstahl des Typs A1, A2, A3, A4 oder A5, und die äußere Oberfläche der Mutter (38) einen Mittenrauwert Ra von 0,8 µm oder weniger, bevorzugt 0,1 µm oder weniger, aufweist.

14. Verfahren zur Herstellung eines Klemmhebels (1) nach einem der Ansprüche 1 bis 11, mit folgenden Schritten:
a) Fertigung des Griffteils (2) mit Aufnahmeraum (11) und Fertigung des Befestigungsteils (3),
b) Einbringen der Nut (14) im Aufnahmeraum (11) des hülsenartigen Ansatzes (5);
c) Polieren der äußeren Oberfläche des Griffteils (2) und zumindest des Teils der äußeren Oberfläche des Befestigungsteils (3) mit einem Mittenrauwert Ra von 0,8 µm oder weniger, bevorzugt 0,1 µm oder weniger;
d) Einsetzen des Spannrings (13), wobei der Spannring (13) in einem elastisch gestauchten Zustand von der Einführöffnung (8) bis zur Nut (14) geschoben wird, und Einsetzten der Dichtung (16);
e) Einschieben des Befestigungsteils (3) durch die Einführöffnung (8) in den Aufnahmeraum (11), bis die Rastkante (12) hinter dem Spannring (13) verrastet ist.

15. Verfahren nach Anspruch 14, **dadurch gekennzeichnet, dass** in Schritt a) das Griffteil (2) mit Aufnahmeraum (11) durch Edelstahl-Feinguss gefertigt wird, wobei auch eine Innenzahnung (15b) im Aufnahmeraum (11) erhalten wird.

16. Verfahren nach Anspruch 14 oder 15, **dadurch gekennzeichnet, dass** in Schritt c) das Griffteil (2) und das Befestigungsteil (3) getrennt voneinander oder zusammen einer Oberflächenbehandlung unterzogen werden, mit folgenden Schritten:
aa) Das Griffteil (2) und das Befestigungsteil (3) werden einem ersten Poliervorgang unterzogen, wobei das Griffteil (2) und das Befestigungsteil (3), polygone Schleifkörper (51), insbesondere mit Linienradien zwischen 1 mm und 6 mm, Polierpaste und Petroleum (53) in einen Behälter (54), insbesondere einen Schwingförderer, eingefüllt sind und wenigstens 8 Stunden, insbesondere wenigstens 12 Stunden, durchmischt werden, wobei während des Durchmischens Polierpaste wiederholt nachgefüllt wird;
bb) Das Griffteil (2) und das Bearbeitungsteil (3) werden gewaschen;
cc) Das Griffteil (2) und das Bearbeitungsteil (3) werden einem letzten Poliervorgang unterzogen, wobei das Griffteil (2) und das Bearbeitungsteil (3), eine Mischung organischer Trägermaterialien (57) unterschiedlicher Härte, ein mineralisches Öl (62) und Graphitpulver (61) in einen Behälter (54), insbesondere einen Schwingförderer, eingefüllt sind und wenigstens 2 Stunden, insbesondere wenigstens 3 Stunden, durchmischt werden;
dd) Das Griffteil (2) und das Befestigungsteil (3) werden gewaschen.

17. Verfahren nach Anspruch 16, **dadurch gekennzeichnet, dass** in Schritt cc) die organischen Trägermaterialien (57) Getreidedreschabfälle (58), Maisstärke (59) und Holzpartikel (60) umfassen, insbesondere mit Teileabmessungen (AB) in den organischen Trägermaterialien (57) von maximal 3 mm.

18. Verfahren nach Anspruch 16 oder 17, **dadurch gekennzeichnet, dass** mit dem Griffteil (2) und/oder dem Befestigungsteil (3), insbesondere nur mit dem Befestigungsteil (3), zwischen den Schritten bb) und cc) weiterhin folgende Schritte stattfinden:
bb') Das Griffteil (2) und/oder das Befestigungsteil (3) werden einem mittleren Poliervorgang unterzogen, wobei das Griffteil (2) und/oder das Befestigungsteil (3), zylindrische Schleifkörper (55), insbesondere mit einem Durchmesser (DZ) zwischen 3 mm und 6 mm und einer Länge (LZ) zwischen 8 mm und 12 mm, Polierpaste mit einer feineren Körnung als in Schritt aa) und Petroleum (53) in einen Behälter (54), insbesondere einen Schwingförderer, eingefüllt sind und wenigstens 8 Stunden, insbesondere wenigstens 12 Stunden, durchmischt werden, wobei während des Durchmischens Polierpaste wiederholt nachgefüllt wird;
bb") Das Griffteil (2) und/oder das Befestigungsteil (3) werden gewaschen.

19. Verwendung eines Klemmhebels (1) nach einem der Ansprüche 1 bis 11 oder eines Klemmhebelsystems (30; 30a) nach Anspruch 12 oder 13 in einem hygienisch überwachten Bereich,
insbesondere in der Lebensmittelindustrie, in der Getränkeherstellung, in der pharmazeutischen Industrie und/oder in der medizintechnischen Industrie.

## Claims

1. Clamping lever (1) comprising
- a single-piece gripping portion (2) having a sleeve-like attachment (5) and a handle (4),
- and a securing portion (3),
wherein the securing portion (3) is guided in an axially movable manner in a receiving space (11) of the sleeve-like attachment (5) and can be displaced in the receiving space (11) between a released position, in which the gripping portion (2) can be freely rotated relative to the securing portion (3), and an engagement position, in which the securing portion (3) is coupled to the gripping portion (2) in order to rotate the securing portion (3) by means of the gripping portion (2),
wherein the securing portion (3) is retained in a captive manner in the receiving space (11) of the sleeve-like attachment (5),
and wherein the sleeve-like attachment (5) is constructed so as to be closed in the direction away from an introduction opening (8) of the receiving space (11) and engages around the securing portion (3) at an upper end in a cap-like manner, **characterised in that**
the gripping portion (2) and the securing portion (3) are produced from a metal material, in particular high-grade steel of the type A1, A2, A3, A4 or A5,
**in that** the outer surface of the gripping portion (2) and at least a portion of the outer surface of the securing portion (3) have a mean roughness value Ra of 0.8 *µ*m or less, in particular 0.1 *µ*m or less,
**in that** the handle (4) is constructed in a closed manner,
**in that** the receiving space (11) of the sleeve-like attachment (5) has a groove (14) in which a clamping ring (13), in particular a round wire ring, is laid, wherein the clamping ring (13) protrudes inwards with respect to the groove (14) and the securing portion (3) engages behind the clamping ring (13) with a locking edge (12),
and **in that** a seal (16) of a resilient material, in particular EPDM, is retained in the sleeve-like attachment (5) at the introduction opening (8), wherein the seal (16) abuts the securing portion (3) and seals the receiving space (11) with respect to the environment.

2. Clamping lever (1) according to claim 1, **characterised in that** the outer surface of the gripping portion (2) in all concave-curved regions has a local radius of curvature (K2) of at least 5 mm,
in particular wherein the outer surface of the gripping portion (2) also has in all convex-curved regions a local radius of curvature (K1) of at least 5 mm.

3. Clamping lever (1) according to claim 1 or 2, **characterised in that** the seal (16) has a front edge (18) which is curved or which extends obliquely with respect to the outer side of the securing portion (3), wherein the seal (16) tapers away from the gripping portion (2) in the region of the front edge (18).

4. Clamping lever (1) according to any one of the preceding claims, **characterised in that** the seal (16) abuts in a stepless manner against a circumferential edge (17) of the introduction opening (8).

5. Clamping lever (1) according to any one of the preceding claims, **characterised in that** the securing portion (3) has at the upper end an external tooth arrangement (15a) and the sleeve-like attachment (5) has in the receiving space (11) an internal tooth arrangement (15b) for coupling in the engagement position in a rotationally secure manner.

6. Clamping lever (1) according to any one of the preceding claims, **characterised in that** the securing portion (3) has a portion (40) tapering in the direction upwards away from the locking edge (12).

7. Clamping lever (1) according to any one of the preceding claims, **characterised in that** the securing portion (3) is pretensioned with respect to the gripping portion (2) by means of resilient force into the released position or the engagement position,
in particular by means of a pressure spring (9) which is arranged between the securing portion (3) and a base (10) of the sleeve-like attachment (5).

8. Clamping lever (1) according to claim 7, **characterised in that** the securing portion (3) is pretensioned by means of resilient force into the released position, wherein the securing portion (3) in the released position is deployed to the maximum extent out of the sleeve-like attachment (5).

9. Clamping lever (1) according to any one of the preceding claims, **characterised in that** at least the portion of the outer surface of the securing portion (3) has a lower mean roughness value Ra than the outer surface of the gripping portion (2),
in particular wherein at least the portion of the outer surface of the securing portion (3) has a mean roughness value Ra of 0.04 *µ*m or less.

10. Clamping lever (1) according to any one of the preceding claims, **characterised in that** the securing portion (3) has at the lower end a shaft portion (7) which is provided with an outer thread and the securing portion (3) further has outside the sleeve-like attachment (5) an annular support face (21) which extends perpendicularly to the axial displacement direction (A) of the securing portion (3) and which faces the shaft portion (7),
in particular wherein the annular support face (21) delimits a conical portion (20) of the securing portion (3).

11. Clamping lever (1) according to claim 10, **characterised in that** a further threadless shaft portion (23) is provided between the shaft portion (7) and the annular support face (21), in particular wherein the portion of the outer surface of the securing portion (3) with a mean roughness value Ra of 0.8 *µ*m or less extends from the upper end of the securing portion (3) up to and including the further shaft portion (23) .

12. Clamping lever system (30; 30a) comprising
- a clamping lever (1) according to claim 10 or 11, and
- at least one sealing disc (35; 35a) having a metal disc (37) and a circumferential sealing member (36; 36a) of resilient material, in particular of EPDM, wherein the circumferential sealing member (36; 36a) in the relaxed state protrudes axially at both sides with respect to the metal disc (37).

13. Clamping lever system (30; 30a) according to claim 12, wherein the clamping lever system (30; 30a) further comprises
- a nut (38), in particular a cap nut, having an inner thread, in which the outer thread of the shaft portion (7) can be screwed,
in particular wherein the nut (38) is produced from a metal material, preferably a high-grade steel of the type A1, A2, A3, A4 or A5, and the outer surface of the nut (38) has a mean roughness value Ra of 0.8 *µ*m or less, preferably 0.1 *µ*m or less.

14. Method for producing a clamping lever (1) according to any one of claims 1 to 11, having the following steps:
a) producing the gripping portion (2) with a receiving space (11) and producing the securing portion (3),
b) introducing the groove (14) in the receiving space (11) of the sleeve-like attachment (5);
c) polishing the outer surface of the gripping portion (2) and at least the portion of the outer surface of the securing portion (3) having a mean roughness value Ra of 0.8 *µ*m or less, preferably 0.1 *µ*m or less;
d) inserting the clamping ring (13), wherein the clamping ring (13) in a resiliently compressed state is pushed from the introduction opening (8) as far as the groove (14), and inserting the seal (16);
e) inserting the securing portion (3) through the introduction opening (8) into the receiving space (11) until the locking edge (12) is locked behind the clamping ring (13).

15. Method according to claim 14, **characterised in that** in step a) the gripping portion (2) having the receiving space (11) is produced by means of high-grade steel investment casting, wherein an internal tooth arrangement (15b) is also obtained in the receiving space (11).

16. Method according to claim 14 or 15, **characterised in that** in step c) the gripping portion (2) and the securing portion (3) are subjected separately from each other or together to a surface processing, having the following steps:
aa) the gripping portion (2) and the securing portion (3) are subjected to a first polishing operation, wherein the gripping portion (2) and the securing portion (3), polygonal grinding members (51), in particular with linear radii between 1 mm and 6 mm, polishing paste and petroleum (53) are poured into a container (54), in particular an oscillating conveyor, and are mixed for at least 8 hours, in particular at least 12 hours, wherein during the mixing operation, polishing paste is repeatedly replenished,
bb) the gripping portion (2) and the processing portion (3) are washed;
cc) the gripping portion (2) and the processing portion (3) are subjected to a final polishing operation, wherein the gripping portion (2) and the processing portion (3), a mixture of organic carrier materials (57) of different hardness, a mineral oil (62) and graphite powder (61) are poured into a container (54), in particular an oscillating conveyor, and are mixed for at least 2 hours, in particular at least 3 hours;
dd) the gripping portion (2) and the securing portion (3) are washed.

17. Method according to claim 16, **characterised in that** in step cc) the organic carrier materials (57) comprise grain threshing waste (58), maize starch (59) and wood particles (60), in particular having component dimensions (AB) in the organic carrier materials (57) of a maximum of 3 mm.

18. Method according to claim 16 or 17, **characterised in that** with the gripping portion (2) and/or the securing portion (3), in particular only with the securing portion (3), between the steps bb) and cc) the following steps are further carried out:
bb') the gripping portion (2) and/or the securing portion (3) are subjected to a middle polishing operation, wherein the gripping portion (2) and/or the securing portion (3), cylindrical grinding members (55), in particular having a diameter (DZ) between 3 mm and 6 mm and a length (LZ) between 8 mm and 12 mm, polishing paste having a finer grain size than in step aa) and petroleum (53) are poured into a container (54), in particular an oscillating conveyor, and are mixed for at least 8 hours, in particular at least 12 hours, wherein during the mixing operation polishing paste is repeatedly replenished;
bb") the gripping portion (2) and/or the securing portion (3) are washed.

19. Use of a clamping lever (1) according to any one of claims 1 to 11 or a clamping lever system (30; 30a) according to claim 12 or 13 in a hygienically monitored area,
in particular in the foodstuff industry, in drinks production, in the pharmaceutical industry and/or in the medical technology industry.

## Revendications

1. Levier de blocage (1) comprenant
- une partie monobloc de préhension (2) munie d'une embase (5) en forme de douille, et d'une poignée (4),
- et une partie de fixation (3),
ladite partie de fixation (3) étant guidée avec mobilité axiale dans un espace de réception (11) de ladite embase (5) en forme de douille et étant apte à coulisser, dans ledit espace de réception (11), entre une position débloquée dans laquelle la partie de préhension (2) peut tourner librement par rapport à ladite partie de fixation (3), et une position d'engagement dans laquelle ladite partie de fixation (3) est couplée à ladite partie de préhension (2), en vue de faire tourner ladite partie de fixation (3) au moyen de ladite partie de préhension (2),
sachant que la partie de fixation (3) est retenue de manière imperdable dans l'espace de réception (11) de l'embase (5) en forme de douille,
et sachant que ladite embase (5), en forme de douille, est de réalisation fermée à partir d'un orifice d'insertion (8) dudit espace de réception (11) et ceinture ladite partie de fixation (3) à une extrémité supérieure, à la manière d'un capuchon,
**caractérisé par le fait**
**que** la partie de préhension (2) et la partie de fixation (3) sont fabriquées en un matériau métallique, notamment en de l'acier inoxydable du type A1, A2, A3, A4 ou A5 ;
**que** la surface extérieure de ladite partie de préhension (2), et au moins une part de la surface extérieure de ladite partie de fixation (3), présentent une valeur de rugosité moyenne Ra de 0,8 µm ou moins, en particulier de 0,1 µm ou moins ;
**que** la poignée (4) est de réalisation fermée ;
**que** l'espace de réception (11) de l'embase (5) en forme de douille est pourvu d'une rainure (14) dans laquelle est encastrée une bague de serrage (13), en particulier une bague en fil métallique rond, sachant que ladite bague de serrage (13) fait saillie vers l'intérieur par rapport à ladite rainure (14), et que la partie de fixation (3) emprisonne ladite bague de serrage (13) par-derrière, à l'aide d'une arête d'encliquetage (12) ;
et **qu'**une garniture d'étanchement (16) en un matériau élastique, notamment en EPDM, est retenue dans l'embase (5) du type douille, au niveau de l'orifice d'insertion (8), laquelle garniture d'étanchement (16) est en applique contre la partie de fixation (3) et assure l'étanchéité de l'espace de réception (11) vis-à-vis de l'environnement.

2. Levier de blocage (1) selon la revendication 1, **caractérisé par le fait que** la surface extérieure de la partie de préhension (2) présente un rayon de courbure localisé (K2) d'au moins 5 mm dans toutes les régions à courbure concave,
sachant notamment que ladite surface extérieure de la partie de préhension (2) présente, également dans toutes les régions à courbure convexe, un rayon de courbure localisé (K1) d'au moins 5 mm.

3. Levier de blocage (1) selon la revendication 1 ou 2, **caractérisé par le fait que** la garniture d'étanchement (16) est dotée d'une arête antérieure (18) courbe, ou s'étendant à l'oblique par rapport à la face extérieure de la partie de fixation (3), ladite garniture d'étanchement (16) s'amenuisant dans la région de ladite arête antérieure (18), depuis la partie de préhension (2).

4. Levier de blocage (1) selon l'une des revendications précédentes, **caractérisé par le fait que** la garniture d'étanchement (16) est en applique, sans discontinuité, contre une arête périphérique (17) de l'orifice d'insertion (8).

5. Levier de blocage (1) selon l'une des revendications précédentes, **caractérisé par le fait que** la partie de fixation (3) est munie d'une denture extérieure (15a) à l'extrémité supérieure, l'embase (5) du type douille étant dotée d'une denture intérieure (15b), dans l'espace de réception (11), en vue du couplage avec verrouillage rotatif dans la position d'engagement.

6. Levier de blocage (1) selon l'une des revendications précédentes, **caractérisé par le fait que** la partie de fixation (3) comporte un tronçon (40) s'amenuisant vers le haut à partir de l'arête d'encliquetage (12).

7. Levier de blocage (1) selon l'une des revendications précédentes, **caractérisé par le fait que** la partie de fixation (3) est précontrainte vers la position débloquée ou vers la position d'engagement, par rapport à la partie de préhension (2), sous l'action d'une force élastique
et notamment par l'intermédiaire d'un ressort de pression (9) interposé entre ladite partie de fixation (3) et un fond (10) de l'embase (5) en forme de douille.

8. Levier de blocage (1) selon la revendication 7, **caractérisé par le fait que** la partie de fixation (3) est précontrainte vers la position débloquée, sous l'action d'une force élastique, ladite partie de fixation (3) étant déployée au maximum hors de l'embase (5) du type douille dans ladite position débloquée.

9. Levier de blocage (1) selon l'une des revendications précédentes, **caractérisé par le fait qu'**au moins la part de la surface extérieure de la partie de fixation (3) présente une valeur de rugosité moyenne Ra inférieure à celle de la surface extérieure de la partie de préhension (2),
sachant notamment qu'au moins ladite part de ladite surface extérieure de la partie de fixation (3) présente une valeur de rugosité moyenne Ra de 0,04 µm ou moins.

10. Levier de blocage (1) selon l'une des revendications précédentes, **caractérisé par le fait que** la partie de fixation (3) comporte, à l'extrémité inférieure, un fût (7) doté d'un filetage extérieur, laquelle partie de fixation (3) est par ailleurs munie, à l'extérieur de l'embase (5) en forme de douille, d'une surface annulaire d'appui (21) qui s'étend perpendiculairement à la direction axiale de déplacement (A) de ladite partie de fixation (3), et est tournée vers ledit fût (7),
sachant notamment que ladite surface annulaire d'appui (21) délimite une région tronconique (20) de ladite partie de fixation (3).

11. Levier de blocage (1) selon la revendication 10, **caractérisé par le fait qu'**un fût supplémentaire (23), dépourvu de filetage, est prévu entre le fût (7) et la surface annulaire d'appui (21),
sachant notamment que la part de la surface extérieure de la partie de fixation (3), qui présente une valeur de rugosité moyenne Ra de 0,8 µm ou moins, s'étend depuis l'extrémité supérieure de ladite partie de fixation (3) jusques et y compris ledit fût supplémentaire (23).

12. Système (30 ; 30a) à levier de blocage, comprenant
- un levier de blocage (1) conforme à la revendication 10 ou 11, et
- au moins un disque d'étanchement (35 ; 35a) incluant une rondelle métallique (37) et un corps périphérique d'étanchement (36 ; 36a) en un matériau élastique, notamment en EPDM, lequel corps périphérique d'étanchement (36 ; 36a) fait saillie axialement de part et d'autre, à l'état soulagé, par rapport à ladite rondelle métallique (37).

13. Système (30 ; 30a) à levier de blocage selon la revendication 12,
ledit système (30 ; 30a) à levier de blocage comprenant, par ailleurs,
- un écrou (38), en particulier un écrou borgne à filetage intérieur dans lequel le filetage extérieur du fût (7) peut être vissé, ledit écrou (38) étant notamment fabriqué en un matériau métallique, de préférence en de l'acier inoxydable du type A1, A2, A3, A4 ou A5, et la surface extérieure dudit écrou (38) présentant une valeur de rugosité moyenne Ra de 0,8 µm ou moins, préférentiellement de 0,1 µm ou moins.

14. Procédé de fabrication d'un levier de blocage (1) conforme à l'une des revendications 1 à 11, incluant les étapes suivantes :
a) production de la partie de préhension (2) dotée d'un espace de réception (11), et production de la partie de fixation (3) ;
b) façonnage de la rainure (14) dans l'espace de réception (11) de l'embase (5) du type douille ;
c) polissage de la surface extérieure de ladite partie de préhension (2), et au moins de la part de la surface extérieure de ladite partie de fixation (3) qui présente une valeur de rugosité moyenne Ra de 0,8 µm ou moins, préférentiellement de 0,1 µm ou moins ;
d) introduction de la bague de serrage (13), ladite bague de serrage (13) étant poussée, à l'état de compression élastique, jusqu'à ladite rainure (14) à partir de l'orifice d'insertion (8), puis introduction de la garniture d'étanchement (16) ;
e) enfoncement de ladite partie de fixation (3) dans ledit espace de réception (11), à travers ledit orifice d'insertion (8), jusqu'à ce que l'arête d'encliquetage (12) soit crantée derrière ladite bague de serrage (13).

15. Procédé selon la revendication 14, **caractérisé par le fait que**, durant l'étape a), la partie de préhension (2) comportant l'espace de réception (11) est produite par coulée de précision en acier inoxydable, une denture intérieure (15b) étant également obtenue dans ledit espace de réception (11).

16. Procédé selon la revendication 14 ou 15, **caractérisé par le fait que**, durant l'étape c), la partie de préhension (2) et la partie de fixation (3) sont soumises, séparément l'une de l'autre ou conjointement, à un traitement de surface englobant les étapes suivantes :
aa) la partie de préhension (2) et la partie de fixation (3) sont soumises à une première opération de polissage, ladite partie de préhension (2) et ladite partie de fixation (3), des corps abrasifs polygonaux (51) présentant notamment des rayons linéaires compris entre 1 mm et 6 mm, de la pâte à polir et du pétrole (53) étant déversés dans un réceptacle (54), en particulier dans un convoyeur vibrant, et étant brassés pendant au moins 8 heures, notamment au moins 12 heures, de la pâte à polir étant répétitivement rajoutée au cours du brassage ;
bb) la partie de préhension (2) et la partie de fixation (3) sont lavées ;
cc) la partie de préhension (2) et la partie de fixation (3) sont soumises à une dernière opération de polissage, ladite partie de préhension (2) et ladite partie de fixation (3), un mélange de matériaux substrats organiques (57) de duretés différentes, une huile minérale (62) et de la poudre de graphite (61) étant déversés dans un réceptacle (54), en particulier dans un convoyeur vibrant, et étant brassés pendant au moins 2 heures, notamment au moins 3 heures ;
dd) ladite partie de préhension (2) et ladite partie de fixation (3) sont lavées.

17. Procédé selon la revendication 16, **caractérisé par le fait que**, durant l'étape cc), les matériaux substrats organiques (57) incluent des résidus de battage de céréales (58), de l'amidon de maïs (59) et des particules de bois (60) présentant, en particulier, des dimensions particulaires (AB) de 3 mm au maximum dans lesdits matériaux substrats organiques (57).

18. Procédé selon la revendication 16 ou 17, **caractérisé par le fait qu'**entre les étapes bb) et cc), la partie de préhension (2) et/ou la partie de fixation (3), en particulier uniquement ladite partie de fixation (3), fait (font) par ailleurs l'objet des étapes suivantes :
bb') la partie de préhension (2) et/ou la partie de fixation (3) est (sont) soumise(s) à une opération intermédiaire de polissage, ladite partie de préhension (2) et/ou ladite partie de fixation (3), des corps abrasifs cylindriques (55) présentant notamment un diamètre (DZ) compris entre 3 mm et 6 mm et une longueur (LZ) comprise entre 8 mm et 12 mm, de la pâte à polir présentant une granulométrie plus fine qu'à l'étape aa), et du pétrole (53), étant déversés dans un réceptacle (54), en particulier dans un convoyeur vibrant, et étant brassés pendant au moins 8 heures, notamment au moins 12 heures, de la pâte à polir étant répétitivement ajoutée au cours du brassage ;
bb") ladite partie de préhension (2) et/ou ladite partie de fixation (3) est (sont) lavée(s).

19. Utilisation d'un levier de blocage (1) conforme à l'une des revendications 1 à 11 ou d'un système (30 ; 30a) à levier de blocage conforme à la revendication 12 ou 13, dans une zone à hygiène contrôlée,
en particulier dans l'industrie alimentaire, la production de boissons, l'industrie pharmaceutique et/ou l'industrie des technologies médicales.
